# EUROPÄISCHE PATENTSCHRIFT

(11) **EP 2 116 352 B1**
(45) Veröffentlichungstag und Bekanntmachung des Hinweises auf die Patenterteilung: **09.06.2010**
(21) Anmeldenummer: 08008726.5
(22) Anmeldetag: 09.05.2008
(51) Int. Cl.: B29C 47/70, B29C 47/12, B29C 47/06

(54) **Extrusions-Werkzeug für eine Vorrichtung zur Herstellung von Kunststoff-Verbundrohren mit Querrillen**
Extrusion tool for a device for producing plastic connecting rods with grooves
Outil d'extrusion pour un dispositif pour la fabrication de tuyaux composites en matière synthétique avec des rainures obliques

(43) Veröffentlichungstag der Anmeldung: 11.11.2009
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred

(56) Entgegenhaltungen:
- WO-A-02/066229
- DE-A1- 10 210 847
- DE-A1-102004 002 433
- GB-A- 2 107 844
- US-A- 5 256 051
- US-A1- 2005 191 378

## Beschreibung

Die Erfindung betrifft ein Extrusions-Werkzeug nach dem Oberbegriff des Anspruches 1.

Extrusions-Werkzeuge, die in der Praxis auch als Rohrköpfe bezeichnet werden, der allgemeinen Gattung, wie sie beispielsweise aus der EP 0 834 386 B1 (entspr. US-PS 6,045,347) bekannt sind, werden mit zunehmendem Durchmesser der zu fertigenden Verbundrohre immer größer und schwerer. Ihre Herstellung wird daher auch zunehmend zu teuer.

Aus der DE 10 2004 002 433 A1 (entspr. CA 2,416,083/2,419,703 A) ist es zur Lösung dieses Problems bekannt, zwei voneinander beabstandete Schmelze-Kanäle vorzusehen, die in ein Paket von Verteilerplatten einmünden. In deren Oberfläche sind Verteiler-Kanäle eingefräst, die die Kunststoff-Schmelze zum Innen-Kanal bzw. zum Außen-Kanal führen. Die Platten sind aneinander geschraubt. Aufgrund der außerordentlich großen Drücke und damit Kräfte, die von der Schmelze auf die Platten ausgeübt werden, besteht die Gefahr, dass die Platten aufgebogen werden und Undichtigkeiten auftreten, d. h. die Kunststoff-Schmelze tritt aus. Der Reinigungsaufwand hierfür ist erheblich. Außerdem ist eine gleichmäßige Verteilung des Kunststoffs nicht zu erreichen.

Im Prinzip ähnliche Extrusions-Werkzeuge sind aus der EP 1 102 674 B 1 (entspr. US-PS 6,616,437) und der EP 1 360 061 B1 (entspr. US-PS 7,037,098) bekannt.

Diese plattenförmigen Verteiler lassen sich an sich relativ einfach fertigen. Nachteilig ist die bereits erwähnte Gefahr einer Leckage aufgrund unterschiedlicher Biegewiderstandsmomente in Abhängigkeit vom Durchmesser der Platten. Damit ist eine sichere Abdichtung der Schmelzekanäle nicht einfach zu gewährleisten. Eine Zentrierung des Innen-Kanals und des Außen-Kanals ist bei diesen bekannten Extrusions-Werkzeugen nicht möglich.

Der Erfindung liegt daher die Aufgabe zugrunde, ein Extrusions-Werkzeug der gattungsgemäßen Art so auszugestalten, dass die Gefahr von Leckagen ausgeschlossen ist.

Diese Aufgabe wird erfindungsgemäß bei dem gattungsgemäßen Extrusions-Werkzeug mit den Merkmalen des Kennzeichnungsteils des Anspruches 1 gelöst. Da die Verteiler-Kanäle als geschlossene Kanäle innerhalb einteiliger bzw. einstückiger Platten bzw. Scheiben ausgebildet sind, treten keinerlei Abdichtungsprobleme auf. Da die Gesamtverteilung der Kunststoff-Schmelze innerhalb der Stemverteiler erfolgt, können in den nachfolgenden Kanälen, nämlich dem Innen-Kanal und dem Außen-Kanal, die zur Innen-Düse bzw. zur Außen-Düse führen, alle Einstellmöglichkeiten vorgesehen werden, wie sie zum Stand der Technik gehören, nämlich eine Zentrierung des Düsen-Spalts und eine Einstellung des Fließ-Querschnitts des jeweiligen Kanals über den Umfang, um eine gleichmäßige Wanddickenverteilung der zu extrudierenden Schläuche und damit der herzustellenden Rohre zu erreichen.

Vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt:
- Fig. 1: eine Draufsicht auf eine Vorrichtung zur Herstellung von Verbundrohren mit einem erfindungsgemäßen Extrusions- Werkzeug in schematischer Teil-Darstellung,
- Fig. 2: einen Längsschnitt durch ein Extrusions-Werkzeug gemäß der Erfindung,
- Fig. 3: eine Draufsicht auf einen Außen-Sternverteiler gemäß dem Sichtpfeil III in Fig. 4,
- Fig. 4: einen Querschnitt durch den Außen-Sternverteiler gemäß der Schnittlinie IV-IV in Fig. 3,
- Fig. 5: einen Schnitt durch den Außen-Sternverteiler gemäß der Schnittlinie V-V in Fig. 2,
- Fig. 6: eine Draufsicht auf einen Innen-Sternverteiler gemäß dem Sichtpfeil VI in Fig. 7,
- Fig. 7: einen Querschnitt durch den Innen-Sternverteiler gemäß der Schnittlinie VII-VII in Fig. 6, und
- Fig. 8 und 9: eine Einrichtung zur Veränderung des Querschnitts von In- nen-Kanal bzw. Außen-Kanal.

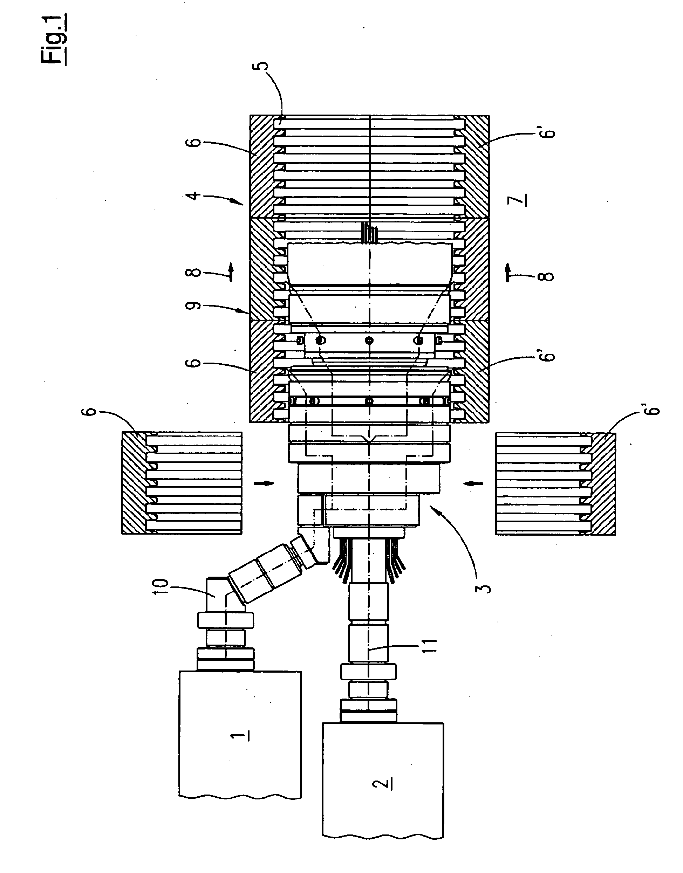

Wie Fig. 1 erkennen lässt, weist eine Vorrichtung zur Herstellung von Kunststoff-Verbundrohren mit Querrillen zwei Extruder 1, 2 auf, die an ein Extrusions-Werkzeug 3, das in der Praxis auch als Rohrkopf bezeichnet wird, angeschlossen sind. Aus dem Extrusions-Werkzeug 3 werden zwei Schläuche aus Kunststoffschmelze ineinander koextrudiert, aus denen das erwähnte Verbundrohr geformt wird. Hierzu dient eine in der Praxis auch als Korrugator bezeichnete Form-Maschine 4, die aus mit einer InnenProfilierung 5 versehenen Halb-Kokillen 6, 6' gebildet werden, die auf einer Formstrecke 7 paarweise aneinander gesetzt und in einer Bewegungs-Richtung 8 der auf diese Weise gebildeten Form 9 dicht aneinander liegen. In der Form 9 werden die erwähnten Verbundrohre geformt. Diese Technik ist in der Praxis allgemein bekannt und beispielsweise in der EP 0 764 516 B1 (entspr. US-PS 5,693,347) dargestellt und beschrieben ist, worauf zur Erläuterung verwiesen werden darf.

Der Extruder 1 ist ein sogenannter Seiten-Extruder, weil er über eine seitliche Schmelze-Leitung 10 in das Extrusions-Werkzeug 3 einmündet, während der andere Extruder 2 mittig, d. h. konzentrisch zur Mittel-Längs-Achse 11 der Form 9 in das Extrusions-Werkzeug 3 einmündet.

Das Extrusions-Werkzeug 3 weist einen aus mehreren Teilen zusammengeschraubten Innen-Düsendorn 12 auf, der von einem koaxial zur Achse 11 verlaufenden Leitungs-Kanal 65 durchsetzt ist. Der Innen-Düsendorn 12 ist konzentrisch zur Achse 11 von einem ebenfalls mehrteiligen Innen-Düsenmantel 13 umgeben, der wiederum ebenfalls konzentrisch zur Achse 11 von einem Außen-Düsendorn 14 umgeben ist. Zwischen dem Innen-Düsendorn 12 und dem Innen-Düsenmantel 13 ist ein konzentrisch zur Achse 11 ausgebildeter Innen-Kanal 16 begrenzt, während zwischen dem Außen-Düsendorn 14 und einem Außen-Düsenmantel 15 ein Außen-Kanal 17 begrenzt ist. Der Innen-Kanal 16 mündet mittels einer Innen-Düse 18 aus dem Extrusions-Werkzeug 3 aus, während der Außen-Kanal 17 mittels einer Außen-Düse 19 aus dem Extrusions-Werkzeug 3 ausmündet. Aus den beiden Düsen 18, 19 werden der erwähnte Innen-Schlauch bzw. der erwähnte Außen-Schlauch extrudiert, die in beispielsweise aus der EP 0 563 575 (entspr. US 5,320,797) bekannten Weise zu einem Verbundrohr miteinander verbunden werden. Der Innen-Düsendorn 12, der Innen-Düsenmantel 13, der Außen-Düsendorn 14 und der Außen-Düsenmantel 15 sind unter Zwischenschaltung eines Innen-Sternverteilers 20 und eines Außen-Sternverteilers 21 und eines Pinolen-Werkzeugs 22 an einem Trag-Teil 23 befestigt. Im Bereich dieses Trag-Teils 23 wird das Extrusions-Werkzeug 3 über eine nicht dargestellte Tragkonstruktion auf einem ebenfalls nicht dargestellten Fundament abgestützt, wie es in der Praxis üblich ist.

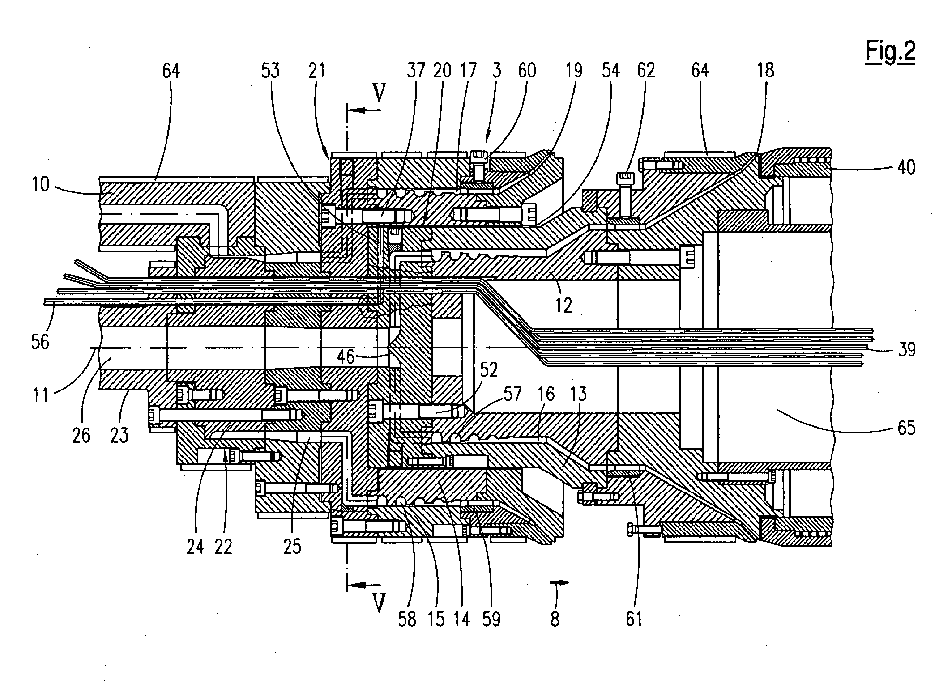

Die Schmelze-Leitung 10 vom Seiten-Extruder 1 mündet in das Pinolen-Werkzeug 22 ein, das einen Staubalken bzw. einen Strömungswiderstand 24 aufweist, mittels dessen sichergestellt wird, dass die vom Extruder 1 zugeführte Kunststoff-Schmelze über den Umfang gleichmäßig verteilt einem Ring-Kanal 25 zugeführt wird, von wo aus sie in den Außen-Sternverteiler 21 eintritt. Der Extruder 2 mündet über einen zur Achse 11 konzentrischen Schmelze-Kanal 26, der auch das Pinolen-Werkzeug 22 und den Außen-Sternverteiler 21 durchsetzt, in den Innen-Sternverteiler 20 ein, wie insgesamt Fig. 2 entnehmbar ist.

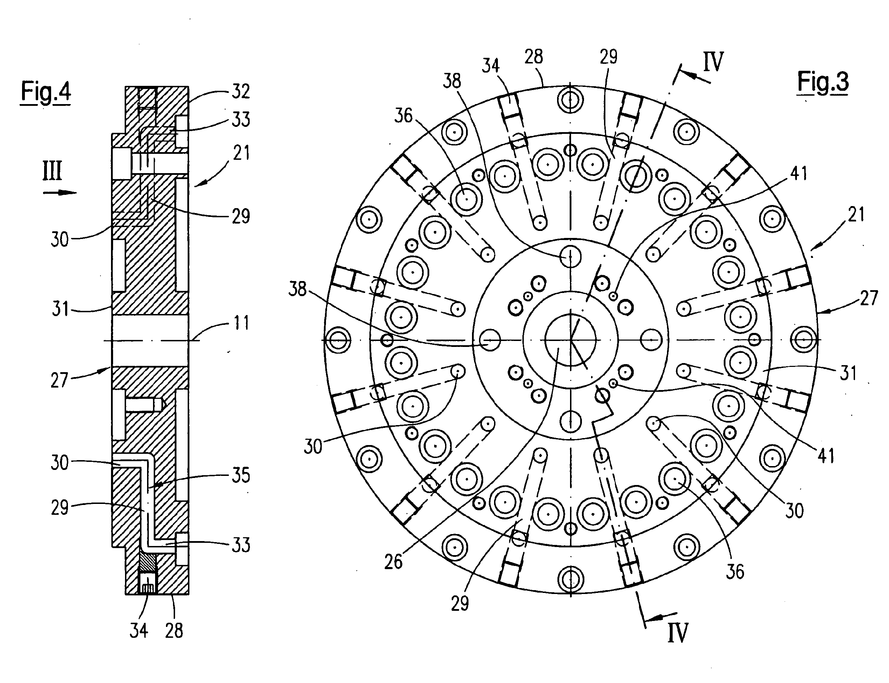

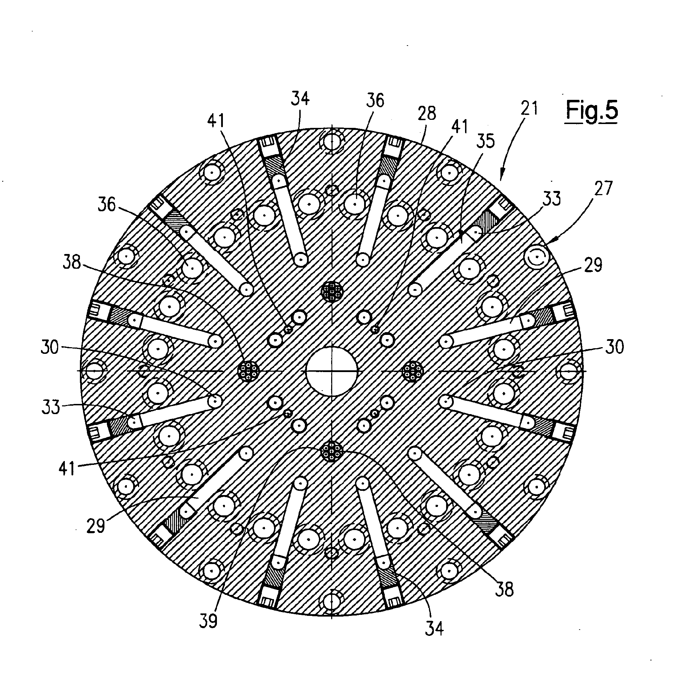

Wie sich aus den Fig. 3 bis 5 ergibt, besteht der Außen-Sternverteiler 21 im Wesentlichen aus einer massiven ringzylindrischen Stahl-Scheibe 27, in die von der ringzylindrischen Außen-Umfangs-Fläche 28 her radial zur Mittel-Längs-Achse 11 Radial-Kanäle 29 in gleichen Winkelabständen zueinander gebohrt sind. Am radial inneren Ende dieser Radial-Kanäle 29 münden in diese parallel zur Achse 11 verlaufende Anschluss-Kanäle 30 ein, die von der dem Ring-Kanal 25 zugewandten Stirnfläche 31 der Scheibe 27 in diese gebohrt sind, wobei der radiale Abstand dieser Anschluss-Kanäle 30 von der Achse 11 dem Radius des Ring-Kanals 25 - ebenfalls bezogen auf die Achse 11 - entspricht, so dass die Anschluss-Kanäle 30 und damit auch die Radial-Kanäle 29 an den Ring-Kanal 25 angeschlossen sind. Von der der Stirnfläche 31 abgewandten, dem Innen-Sternverteiler 20 zugewandten Stirnfläche 32 aus sind Austritts-Kanäle 33 in die Scheibe 27 gebohrt, die in die Radial-Kanäle 29 einmünden und über die die Radial-Kanäle 29 mit dem Außen-Kanal 17 verbunden sind. Radial außerhalb der Austritts-Kanäle 33 sind die Radial-Kanäle 29 nach außen mittels Schraub-Stopfen 34 verschlossen. Die Anschluss-Kanäle 30 mit den Radial-Kanälen 29 und den Austritts-Kanälen 33 bilden also Außen-Verteiler-Kanäle 35 zwischen Ring-Kanal 25 und Außen-Kanal 17. In der Scheibe 27 sind weiterhin zahlreiche Durchgangs-Bohrungen 36 für Verbindungs-Schrauben 37, mittels derer ein Teil des Außen-Düsendorns 14 mit dem Außen-Sternverteiler 21 axial verbunden ist. Des Weiteren sind eine Reihe von Leitungs-Durchlässen 38 vorgesehen, durch die Versorgungs-Leitungen 39 hindurchgeführt und durch den Leitungs-Kanal 65 zu einem an das Extrusions-Werkzeug 3 angeflanschten Kühl- und Kalibrier-Dom 40 geführt werden. Wie den Fig. 2, 3 und 5 entnehmbar ist, sind die Versorgungsleitungen 39 zwischen den Schmelze-Kanälen 25, 26 angeordnet, und zwar in symmetrischer Anordnung über den Umfang. Im dargestellten Ausfiihrungsbeispiel sind vier Leitungs-Durchlässe 38 in Winkelabständen von 90° vorgesehen. Weiterhin sind Durchgangs-Bohrungen 41 für Be- und Entlüftungs-Leitungen 56 vorgesehen. Auch diese sind symmetrisch über den Umfang angeordnet, wie den Fig. 3 und 5 entnehmbar ist.

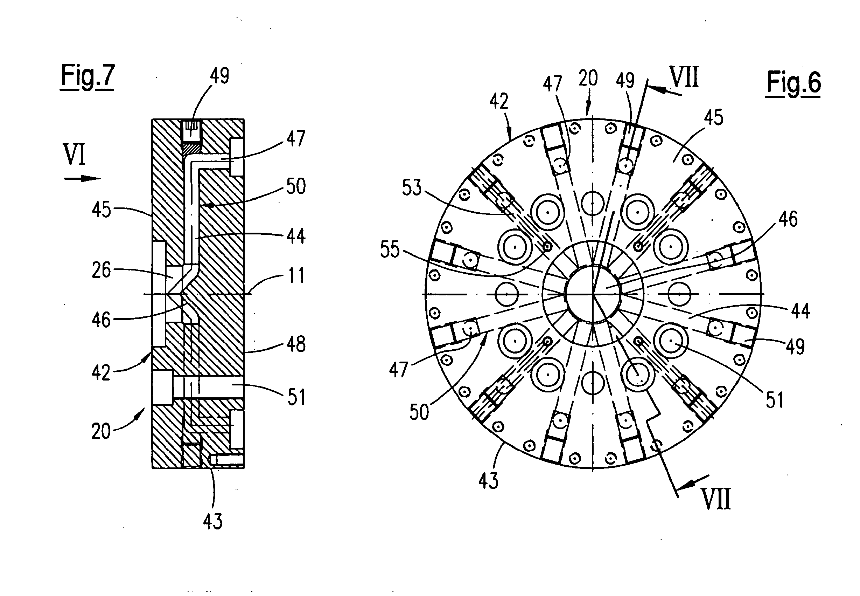

Der Innen-Sternverteiler 20 besteht - wie den Fig. 6 und 7 entnehmbar ist - ebenfalls aus einer etwa ringzylindrischen Stahl-Scheibe 42, in die ebenfalls von der Außen-Umfangs-Fläche 43 aus Radial-Kanäle 44 gebohrt sind, die auf der dem Außen-Sternverteiler 21 zugewandten Stirnfläche 45 in eine konzentrisch zur Achse 11 eingedrehte kegelstumpfförmige Umlenk-Fläche 46 einmünden, die den stirnseitigen Abschluss des Schmelze-Kanals 26 bildet. Wie bei dem Außen-Sternverteiler 21 münden die Radial-Kanäle 44 über parallel zur Achse 11 verlaufende Austritts-Kanäle 47 auf der der Stirnfläche 45 abgewandten Stirnfläche 48 aus dem Innen-Stemverteiler 20 aus und münden in den Innen-Kanal 16. Radial außerhalb der Austritts-Kanäle 47 sind die Radial-Kanäle 44 mittels Schraub-Stopfen 49 verschlossen, so dass die Radial-Kanäle 44 mit den Austritts-Kanälen 47 in sich geschlossene, ausschließlich in der Scheibe 42 verlaufende Innen-Verteiler-Kanäle 50 bilden. Außerdem sind in der Scheibe 42 des Innen-Sternverteilers 20 Durchgangsbohrungen 51 ausgebildet, durch die hindurch Schrauben 52 zur Verbindung des Innen-Sternverteilers 20 mit dem Innen-Düsendorn 12 geführt sind. Darüber hinaus sind im Innen-Sternverteiler 20 noch Radial-Bohrungen 53 ausgebildet, die an der Außen-Umfangs-Fläche 43 in der Scheibe 42 in einen im mehrteiligen Außen-Düsendorn 14 ausgebildeten Be- und Entlüftungskanal 54 ausmünden, der zwischen der Außen-Düse 19 und der Innen-Düse 18 aus dem Extrusions-Werkzeug 3 ausmündet. Diese Radial-Bohrungen 53 sind durch Anschluss-Bohrungen 55 zur Stirnfläche 45 des Innen-Sternverteilers 20 geführt, wo sie an die Durchgangs-Bohrungen 41 am Außen-Sternverteiler 21 angeschlossen sind. Hierüber kann der Be- und Entlüftungs-Kanal 54 an die Be- und Entlüftungs-Leitungen 56 angeschlossen werden.

Die weiteren Bohrungen in den Scheiben 27 und 42 und die insbesondere in Fig. 2 erkennbaren Verbindungs-Schrauben, die nicht beschrieben sind, dienen konstruktiven Zwecken. Insoweit darf auf die Zeichnung verwiesen werden.

Die Stemverteiler 20, 21 sind jeweils mittels der geschilderten SchraubVerbindungen an die sich anschließenden Teile, nämlich den Außen-Düsendorn 14, den Außen-Düsenmantel 15, den Innen-Düsendorn 12 und den Innen-Düsenmantel 13 angeschlossen, so dass eine absolut schmelzedichte Verbindung hergestellt ist. Des Weiteren liegen die Stemverteiler 20, 21 auch flächig, also fugenlos, dicht aneinander. Innerhalb der Stemverteiler 20, 21 sind geschlossene, also keine Trennfugen aufweisende Verteiler-Kanäle 35 bzw. 50 ausgebildet, an denen auch keine Schmelze austreten könnte.

Der Innen-Kanal 16 und der Außen-Kanal 17 sind jeweils im Anschluss an den Innen-Sternverteiler 20 und den Außen-Sternverteiler 21 als schraubenlinien-förmige, sich in Bewegungs-Richtung 8 verjüngende Schrauben-Kanäle 57 bzw. 58 (sogenannte Wendel-Verteiler) ausgebildet, durch die eine gleichmäßige Verteilung der aus den Innen-Verteiler-Kanälen 50 bzw. Außen-Verteiler-Kanälen 35 austretenden Kunststoff-Schmelze über den gesamten Umfang des Innen-Kanals 16 bzw. des Außen-Kanals 17 stattfindet.

Wie Fig. 2 entnehmbar ist, ist im Innen-Kanal 17 vor der Außen-Düse 19 ein Außen-Düsen-Ring 59 angeordnet, der mittels Einstell-Schrauben 60 radial verstellt werden kann, wodurch der freie Querschnitt des Außen-Kanals 17 über seinen Umfang so verändert werden kann, dass der Durchtritt der Kunststoff-Schmelze über den Umfang des Außen-Kanals 17 möglichst gleichmäßig wird. Ein entsprechender Innen-Düsen-Ring 61 mit ebenfalls radial wirkenden Einstell-Schrauben.62 ist im Innen-Kanal 16 vor der Innen-Düse 18 vorgesehen.

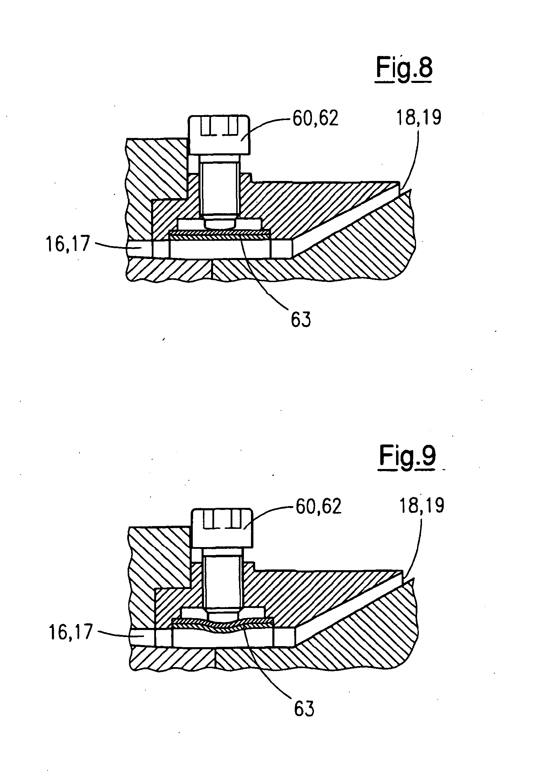

Besonders vorteilhaft ist es, wenn anstelle der radial verstellbaren Außen-Düsen-Ringe 59 bzw. 61 aus der DE 198 31 540 C5 bekannte verformbare Einstell-Hülsen 63 fest in den Außen-Düsenmantel 15 bzw. den Innen-Düsenmantel 13 integriert sind, so dass sie auch an dieser Stelle eine fugenfreie Begrenzung des Außen-Kanals 17 bzw. des Innen-Kanals 16 bilden. Diese Verform-Hülsen 63 können - wie den Fig. 8 und 9 entnehmbar ist - mittels der Einstell-Schrauben 60 bzw. 62 radial zur Achse 11 verformt werden, so dass dadurch der Kanalquerschnitt des Außen-Kanals 17 bzw. des Innen-Kanals 16 über dessen Umfang verändert wird.

Das Extrusions-Werkzeug 3 ist allseitig mit Heiz-Elementen 64 bestückt, so dass zusätzliche Hilfskörper zum Aufheizen des Extrusions-Werkzeugs 3 entfallen können.

## Patentansprüche

1. Extrusions-Werkzeug (3) für eine Vorrichtung zur Herstellung von Kunststoff-Verbundrohren mit Querrillen,
- mit einem inneren Schmelze-Kanal (26) zur Zuführung von Kunststoff-Schmelze,
- mit einem dem inneren Schmelze-Kanal (26) nachgeordneten, und mit diesem über Innen-Verteiler-Kanäle (50) verbundenen, zu einer Innen-Düse (18) führenden Innen-Kanal (16),
- mit einem äußeren Schmelze-Kanal (25) zur Zuführung von Kunststoff-Schmelze und
- mit einem dem äußeren Schmelze-Kanal (25) nachgeordneten und mit diesem über Außen-Verteiler-Kanäle (35) verbundenen, den Innen-Kanal (16) umgebenden und zu einer Außen-Düse (19) führenden Außen-Kanal (17),
**dadurch gekennzeichnet,**
**dass** zwischen dem konzentrisch zu einer Mittel-Längs-Achse (11) verlaufenden inneren Schmelze-Kanal (26) und dem Innen-Kanal (16) ein Innen-Sternverteiler (20) und zwischen dem den inneren Schmelze-Kanal (26) umgebenden äußeren Schmelze-Kanal (25) und dem Außen-Kanal (17) ein Außen-Sternverteiler (21) angeordnet ist,
wobei jeder Stemverteiler (20, 21) aus einer Scheibe (27, 42) besteht, innerhalb derer die Verteiler-Kanäle (35, 50) ausgebildet sind.

2. Extrusions-Werkzeug (3) nach Anspruch 1, **dadurch gekennzeichnet, dass** der innere Schmelze-Kanal (26) den Außen-Sternverteiler (21) in Richtung der Mittel-Längs-Achse (11) durchsetzt und in einer UmlenkFläche (46) des Innen-Sternverteilers (20) endet, aus der die Innen-Verteiler-Kanäle (50) des Innen-Sternverteilers (20) ausmünden.

3. Extrusions-Werkzeug (3) nach Anspruch 1 oder 2, **dadurch gekennzeichnet,**
**dass** die Verteiler-Kanäle (35, 50) von einer jeweiligen Außen-Umfangs-Fläche (28, 43) der jeweiligen Scheibe (27, 42) ausgehende Radial-Kanäle (29, 44) aufweisen, die im Bereich der jeweiligen Außen-Umfangs-Fläche (28, 43) verschlossen sind.

4. Extrusions-Werkzeug (3) nach Anspruch 3, **dadurch gekennzeichnet, dass** am radial äußeren Ende des jeweiligen Radial-Kanals (29, 44) ein Austritts-Kanal (33, 47) ausmündet, der zum Innen-Kanal (16) bzw. zum Außen-Kanal (17) führt.

5. Extrusions-Werkzeug (3) nach einem der Ansprüche 1 bis 4, **dadurch gekennzeichnet,**
**dass** im Innen-Kanal (16) und/oder im Außen-Kanal (17) eine radial zur Mittel-Längs-Achse (11) mittels an ihr von außen anliegender Einstell-Schrauben (60, 62) verformbare Einstell-Hülse (63) zur Veränderung des Querschnitts des Innen-Kanals (16) bzw. des Außen-Kanals (17) über seinen Umfang vorgesehen ist.

6. Extrusions-Werkzeug (3) nach einem der Ansprüche 1 bis 5, **dadurch gekennzeichnet,**
**dass** zwischen den Schmelze-Kanälen (25, 26) Leitungs-Durchlässe (38, 41) vorgesehen sind, durch die Versorgungs-Leitungen (39, 56) hindurchgeführt sind.

7. Extrusions-Werkzeug (3) nach Anspruch 6, **dadurch gekennzeichnet, dass** die Leitungs-Durchlässe (38, 41) symmetrisch zur Mittel-Längs-Achse (11) angeordnet sind.

## Claims

1. Extrusion tool (3) for a device for producing plastic connecting rods with grooves comprising,
- an inner melt channel (26) for supplying plastic melt,
- an inner channel (16), which is arranged after the inner melt channel (26) and is connected to the latter via inner distribution channels (50) and leads to an inner nozzle (18),
- an outer melt channel (25) for supplying plastic melt and
- an outer channel (17), which is arranged after the outer melt channel (25), is connected to the latter via outer distribution channels (35), surrounds the inner channel (16) and leads to an outer nozzle (19),
**characterised in that**
between the inner melt channel (26) running concentrically to a middle longitudinal axis (11) and the inner channel (16) an inner star distributor (20) is arranged and between the outer melt channel (25) surrounding the inner melt channel (26) and the outer channel (17) an outer star distributor (21) is arranged, whereby each star distributor (20, 21) consists of a disc (27, 42) in which the distributor channels (35, 50) are formed.

2. Extrusion tool (3) according to claim 1, **characterised in that** the inner melt channel (26) passes through the outer star distributor (21) in the direction of the middle longitudinal axis (11) and ends in a reflecting surface (46) of the inner star distributor (20), from which the inner distributor channels (50) of the inner star distributor (20) open.

3. Extrusion tool (3) according to claim 1 or 2, **characterised in that** the distributor channels (35, 50) comprise radial channels (29, 44) coming from a respective outer circumferential surface (28, 43) of the respective disc (27, 42), which radial channels are closed in the region of the respective outer circumferential surface (28, 43).

4. Extrusion tool (3) according to claim 3, **characterised in that** at the radially outer end of the respective radial channel (29, 44) an outlet channel (33, 47) opens which leads to the inner channel (16) or to the outer channel (17).

5. Extrusion tool (3) according to one of claims 1 to 4, **characterised in that** in the inner channel (16) and/or in the outer channel (17) an adjusting sleeve (63), which is deformable radially to the middle longitudinal axis (11) by means of adjusting screws (60, 62) bearing on the latter from the outside, is provided for changing the cross section of the inner channel (16) or the outer channel (17) over its circumference.

6. Extrusion tool (3) according to one of claims 1 to 5, **characterised in that** between the melt channels (25, 26) line openings (38, 41) are provided, through which the supply lines (39, 56) are guided.

7. Extrusion tool (3) according to claim 6, **characterised in that** the line openings (38, 41) are arranged symmetrically to the middle longitudinal axis (11).

## Revendications

1. Outil d'extrusion (3) pour un dispositif de fabrication de tubes composites en matière synthétique à rainures transversales, comprenant
- un canal de matières en fusion intérieur (26) pour alimenter la masse fondue de matière synthétique,
- un canal intérieur (16) placé en aval du canal de matières en fusion intérieur (26), relié à celui-ci via des canaux de distribution intérieurs (50) et conduisant à une buse intérieure (18),
- un canal de matières en fusion extérieur (25) pour alimentation d'une masse fondue de matière synthétique, et
- un canal extérieur (17) placé en aval du canal de matières en fusion extérieur (25), relié à celui-ci via des canaux de distribution extérieurs (35), entourant le canal intérieur (16) et conduisant à une buse extérieure (19),
**caractérisé en ce que**
entre le canal de matières en fusion intérieur (26) s'étendant de manière concentrique par rapport à un axe longitudinal médian (11) et le canal intérieur (16) est disposé un distributeur en étoile intérieur (20), et entre le canal de matières en fusion extérieur (25) entourant le canal de matières en fusion intérieur (26) et le canal extérieur (17) est disposé un distributeur en étoile extérieur (21), chaque distributeur en étoile (20, 21) étant constitué d'un disque (27, 42) à l'intérieur duquel sont formés les canaux de distribution (35, 50).

2. Outil d'extrusion (3) selon la revendication 1, **caractérisé en ce que** le canal de matières en fusion intérieur (26) traverse le distributeur en étoile extérieur (21) en direction de l'axe longitudinal médian (11) et prend fin dans une surface de déviation (46) du distributeur en étoile intérieur (20), duquel débouchent les canaux de distribution intérieurs (50) du distributeur en étoile intérieur (20).

3. Outil d'extrusion (3) selon la revendication 1 ou 2, **caractérisé en ce que** les canaux de distribution (35, 50) présentent des canaux radiaux (29, 44) partant d'une surface périphérique extérieure (28, 43) respective du disque (27, 42) respectif, qui sont fermés dans la région de la surface périphérique extérieure (28, 43) respective.

4. Outil d'extrusion (3) selon la revendication 3, **caractérisé en ce qu'**à l'extrémité radialement extérieure du canal radial (29, 44) respectif débouche un canal de sortie (33, 47) qui conduit au canal intérieur (16) ou au canal extérieur (17).

5. Outil d'extrusion (3) selon l'une des revendications 1 à 4, **caractérisé en ce qu'**est prévue, dans le canal intérieur (16) et/ou dans le canal extérieur (17), une douille de réglage (63) déformable en direction radiale par rapport à l'axe longitudinal médian (11) au moyen de vis de réglage (60, 62) venant en appui sur celle-ci par l'extérieur, et destinée à faire varier la section transversale du canal intérieur (16) ou du canal extérieur (17) sur sa périphérie.

6. Outil d'extrusion (3) selon l'une des revendications 1 à 5, **caractérisé en ce que**
entre les canaux de matières en fusion (25, 26) sont prévus des passages pour conduits (38, 41) à travers lesquels on fait passer les conduits d'alimentation (39, 56).

7. Outil d'extrusion (3) selon la revendication 6, **caractérisé en ce que** les passages pour conduits (38, 41) sont disposés symétriquement à l'axe longitudinal médian (11).
